# EUROPÄISCHE PATENTSCHRIFT

(11) **EP 0 658 964 B1**
(45) Veröffentlichungstag und Bekanntmachung des Hinweises auf die Patenterteilung: **13.05.1998**
(21) Anmeldenummer: 94119456.5
(22) Anmeldetag: 09.12.1994
(51) Int. Cl.: H02B 13/035, H02B 13/075

(54) **Schaltanlage**
Switch gear
Installation de commutation

(30) Priorität: 15.12.1993 DE 4342796
(43) Veröffentlichungstag der Anmeldung: 21.06.1995
(73) Patentinhaber: ABB PATENT GmbH, 68309 Mannheim (DE)
(72) Erfinder: Leonhardt, Günter, D-40882 Ratingen (DE)
(74) Vertreter: Rupprecht, Klaus, Dipl.-Ing.

(56) Entgegenhaltungen:
- EP-A- 0 291 762
- DE-A- 2 002 743
- DE-C- 422 951
- FR-A- 1 533 266
- FR-A- 2 418 559
- FR-A- 2 438 360
- FR-A- 2 689 305

## Beschreibung

Die Erfindung betrifft eine Schaltanlage gemäß dem Oberbegriff des Anspruche 1, wie aus der EP 0 291 762 A2 bekannt.

Sie betrifft insbesondere eine Mittelspannungsschaltanlage, bei der als Schalterpole Vakuumleistungsschalter vorgesehen sind.

Aufgabe der Erfindung ist es, eine Schaltanlage der eingangs genannten Art noch weiter zu verbessern.

Diese Aufgabe wird erfindungsgemäß gelöst durch die kennzeichnenden Merkmale der Ansprüche 1 oder 6.

Wenn die Vakuumleistungsschalterpole oder die Schalterpole in einem Schaltfeld untergebracht sind, das mit einem Isoliergas, z. B. SF₆-Gas befüllt ist, dann muß bei einer Revision das komplette Gas aus der Schaltanlage abgesaugt werden, was mit hohem Aufwand verbunden ist.

Dadurch, daß jeder Schalterpol erfindungsgemäß in jeweils einem Gehäuse untergebracht ist, ist nur noch das Isoliergas aus dem Inneren des Gehäuses abzusaugen, was eine erhebliche Vereinfachung ist.

Damit die Demontage des Schalterpols einfach erfolgen kann, sind entsprechende Kontaktstücke im Inneren jedes Gehäuses untergebracht, dergestalt, daß der Schalterpol auf einfache Weise nach vorn herausgezogen werden kann.

Eine besonders vorteilhafte Anordnung von Kontaktstücken ist dem Anspruch 3 entnehmbar.

Aufgrund der erfindungsgemäßen Ausgestaltung kann der Abschlußdeckel für jedes Gehäuse gleichzeitig als Träger für den Antrieb des Schalterpols verwendet werden.

Mit der erfindungsgemäßen Ausgestaltung ergeben sich noch weitere vorteilhafte Verbesserungen.

Gemäß Anspruch 6 ist das Gehäuse drehbar angeordnet und weist auf seiner Außenseite Kontaktstücke auf, die in einer ersten Schaltstellung mit den Stromsammelschienen und in einer zweiten Schaltstellung, bei der die Gehäuse um 90° verdreht sind, mit Erde verbunden sind, wobei bei Vorsehen dreier Schalterpole die einen Kontaktstücke der beiden äußeren Schalterpole mit Erde und die anderen Kontaktstücke mit den entsprechenden Kontaktstücken des dazwischen befindlichen Schalterpols verbunden sind.

Anstatt das Gehäuse drehbar zu gestalten, kann jedem Gehäuse gemäß Anspruch 7 auch ein Trennschalter zugeordnet sein, der auf der Außenfläche angeordnet ist und in einer ersten Stellung den Schalterpol mit der zugehörigen Sammelschiene und in einer zweiten Stellung mit Erde verbindet. Die Bewegungsebene wird dann in vorteilhafter Weise mit der Mittellängsachse jedes Schalterpols zusammenfallen, wenn als Trennschalter ein Drehtrennschalter vorgesehen ist. Ist als Trennschalter ein Schubtrennschalter vorgesehen, dann bildet die Linie, auf der das bewegliche Kontaktstück des Schubtrennschalters verläuft, mit der Mittellängsachse jedes Schalterpols eine vertikal verlaufende Ebene.

Weitere vorteilhafte Ausgestaltungen der Erfindung sind den weiteren Unteransprüchen zu entnehmen.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Figur 1: eine Längsschnittansicht durch ein Schaltfeld,
- Figur 2: eine Schnittansicht gemäß Schnittlinie a-a,
- Figuren 3 und 4: die Schaltanlage in zwei Betriebsstellungen,
- Figur 5: eine Längsschnittansicht durch eine weitere Ausgestaltung der Erfindung, und
- Figur 6: eine Schnittansicht gemäß der Schnittlinie b-b der Figur 5.

In einem Schaltfeldgehäuse 10 befinden sich drei Schalterpole 11, 12 und 13, deren Mittellängsachsen M-M horizontal und parallel zueinander in einer horizontalen Ebene verlaufen. Das Schaltfeldgehäuse besitzt dabei einen Boden 14, eine Frontwand 15, eine Rückwand 16 und Seitenwände 17 und 18 sowie eine obere Abschlußwand 19. Die Mittellängsachsen der Schalterpole 11, 12 und 13 verlaufen dabei senkrecht zur Frontwand 15.

Auf der Bodenwand 14 ist je eine Durchführung 20 pro Schalterpol befestigt, an der ein als Schienenleiter ausgeführter Zuführungsleiter 21 angeschlossen ist, der einen horizontalen Abschnitt 22 und einen vertikalen Abschnitt 23 aufweist. Der vertikale Abschnitt 23 liegt näher zur Rückwand 16 hin als die Durchführung 20.

Am freien Ende des vertikalen Abschnittes 23 der Schiene 21 ist eine Anschlußlasche 24 befestigt, an der ein Anschlußstück 25 zu dem festen Kontaktstück 26 eines Vakuumschalterpols 27 angeschlossen ist. Der Vakuumschalterpol 27 ist in einem zylindrischen Gehäuse 29 eingesetzt und darin auf geeignete Weise geführt, wobei die Achsen des Vakuumschalterpols 27 und des Gehäuses 29 zusammenfallen. Das Anschlußstück 25 zu dem festen Kontaktstück 26 durchdringt den Boden 28 des zylinderförmigen Gehäuses 29 aus Isolierstoff durchdringt. Mit dem festen Kontaktstück 26 wirkt ein bewegliches Kontaktstück 30 zusammen, dessen Kontaktstengel 31 über eine Antriebsstange 32 mit einem Antrieb 33 verbunden, der auf der Außenseite der Frontwand 15 befestigt ist. Die Betätigungsrichtung des Antriebes ist durch den Doppelpfeil 34 gekennzeichnet.

Der Antrieb 33 ist in einem Vorraum 35 vor der Frontwand angeordnet und innerhalb des Antriebsgehäuses 36 befindet sich das Absperrventil 37 einer sog. Bypaßleitung 38, die den Innenraum 39 des Schaltfeldgehäuses 10 mit dem Innenraum des Gehäuses 29 verbindet. Durch eine an der Frontwand 15 angebrachte Doppeltragwand 40 wird das Gehäuse 29 gehaltert; die Doppeltragwand 40 trägt gleichzeitig auch den Antrieb.

Zur Demontage des Gehäuses wird das Ventil 37 der Bypaßleitung 38 geschlossen, so daß die strömungsmäßige Verbindung zwischen dem Innenraum 39 und dem Innenraum des Gehäuses 29 unterbrochen ist. Dann kann durch Entfernung des Antriebes 33 der Vakuumschalterpol 27 aus dem Gehäuse 29 nach vorn herausgezogen werden. Die Verbindung zwischen dem Anschlußstück 25 und dem festen Kontaktstück 26 sowie zwischen dem Vakuumschalterpol 27 bzw. dem Kontaktstengel 31 und den im Inneren des Gehäuses 29 befindlichen nicht näher dargestellten Anschlußelemente zu Kontaktfahnen 50, 51 (siehe weiter unten) sind so ausgebildet, daß der Vakuumschalterpol 27 einfach nach vorn herausgezogen werden kann.

Diese Anordnung ist für jeden Schalterpol gleich.

Oberhalb der einzelnen Schalterpole, die alle gleich ausgebildet sind wie eben beschrieben, befinden sich drei Sammelschienen 41, 42 und 43, von denen abgekröpfte Zuführungsleitungen 44, 45 und 46 abzweigen, die jeweils in einem Kontaktstück 47, 48 und 49 enden, welche Kontaktstücke 47 bis 49 auf einer Linie liegen, die parallel zur Frontwand und horizontal verläuft.

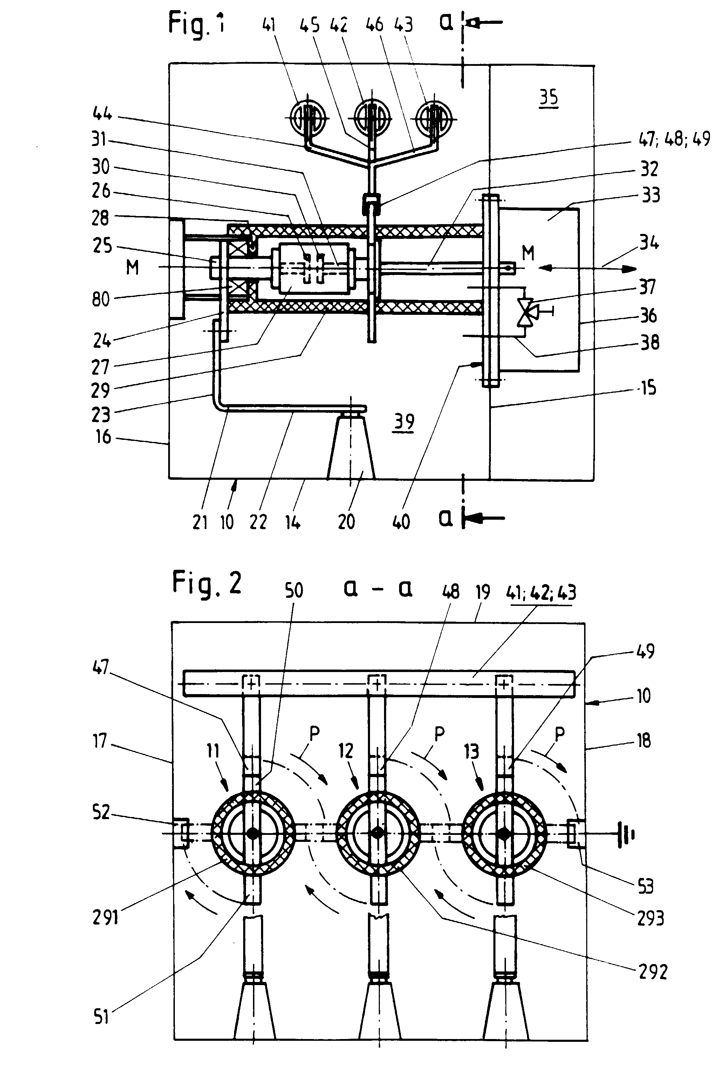

Mit den Kontaktstücken 47 bis 49 wirken an den Gehäusen 29₁, 29₂, 29₃ radial und miteinander fluchtend angebrachte Schalt- oder Kontaktfahnen 50, 51 zusammen. Die Gehäuse 29₁, 29₂ und 29₃ sind drehbar angeordnet und die Kontaktfahnen 50, die lediglich für das Gehäuse 29₁ mit Bezugsziffern versehen sind, können, wie in Figur 2 durch Pfeile P angedeutet, aus einer senkrecht vertikalen Stellung in eine horizontale Stellung verschwenkt werden, in dem die Gehäuse 29₁, 29₂, 29₃ um ihre Mittellängsachse verschwenkt werden. Dabei gelangen die einzelnen Kontaktfahnen wie folgt in Kontakt: die unten liegende Kontaktfahne 51 gelangt mit einem Erdungskontaktstück 52 in Verbindung; die oben gelegene Kontaktfahne 50 gelangt mit der unten gelegenen Kontaktfahne des Gehäuses 92₂ in Verbindung, wogegen die obere Kontaktfahne des Gehäuses 92₂ mit der unteren Kontaktfahne 92₃ in Kontakt kommt. Die obere Kontaktfahne des Gehäuses 92₃ gelangt in Kontakt mit einem Kontaktstück 53, welches an der Seitenwandung 18 angebracht ist und zur Erde führt. In dieser Stellung, in der die Kontaktfahnen 50 und 51 aller drei Gehäuse 29₁, 29₂ und 29₃ in einer horizontalen Linie liegen, ist die Schaltanlage geerdet.

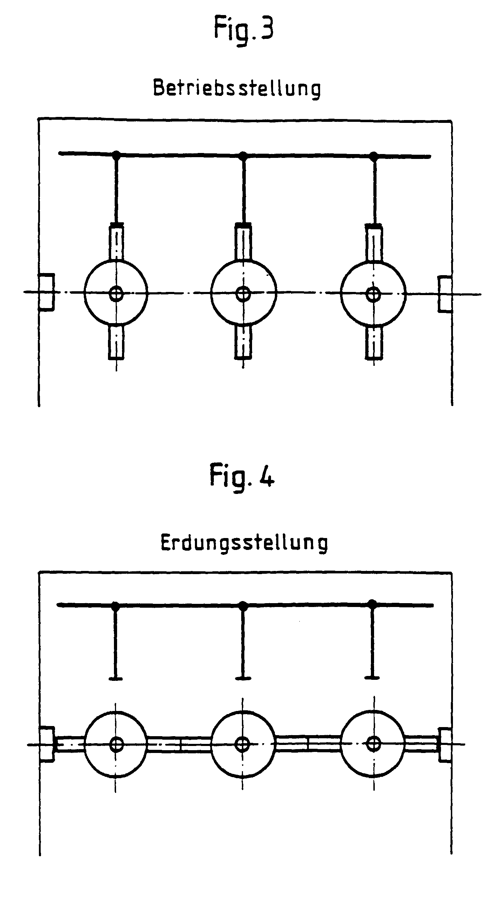

Die Figuren 3 und 4 zeigen dies in schematischer Darstellung. Die Figur 3 zeigt die Betriebsstellung und die Figur 4 die Erdungsstellung.

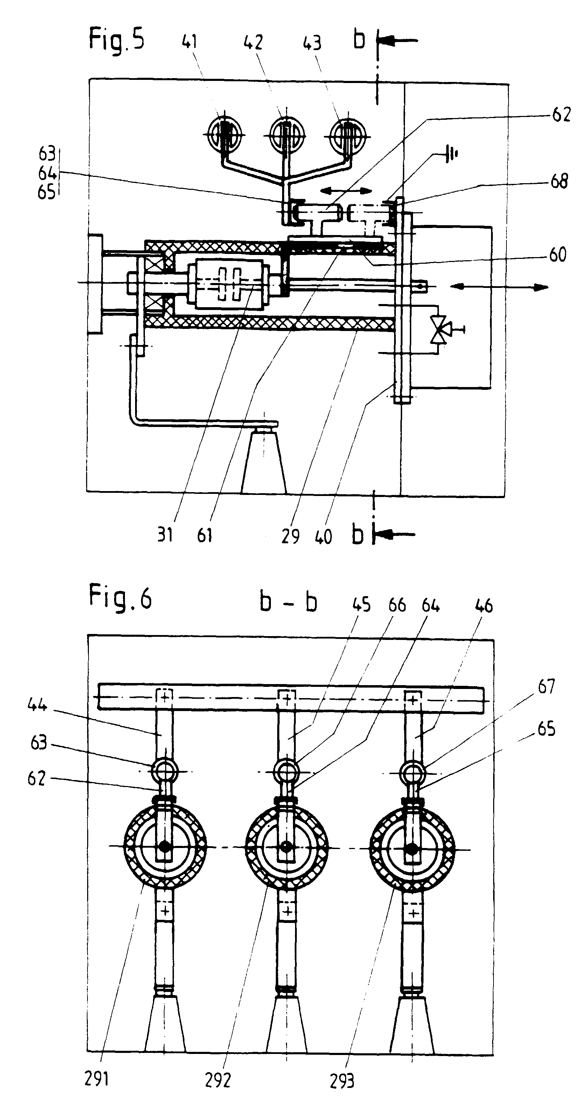

Die Figuren 5 und 6 zeigen eine andere Ausgestaltung der Erfindung. Die meisten Elemente sind denen der Ausführung nach Figur 1 und 2 gleich. Daher wird im folgenden nur auf die Unterschiede eingegangen. Oberhalb des Gehäuses 29 ist an diesem eine Schiene 10 befestigt, die mit einem Kontaktanschluß 61, der an dem Kontaktstengel 31 anschließt und im Gehäuse 29 eingegossen ist, elektrisch leitend verbunden. Auf der Schiene 60 ist ein Schubtrennschalter 62 gleitend gelagert, der mit einem Kontaktstück 63 an der Zuführung 44 fest verbunden ist.

Die Figur 6 zeigt, daß jedem Gehäuse 29₁, 29₂ und 29₃ jeweils ein Schubtrennschalter 62, 64 und 65 zugeordnet ist, der mit Kontaktstücken 63, 65 und 66 an den Zuführungsschienen 44, 45 und 46 verbunden ist. An der Doppelträgerplatte 40 ist für jede Phase ein eigenes Kontaktstück vorgesehen, von welchem lediglich das Kontaktstück 68 dargestellt und zu sehen ist.

Der Schubtrennschalter 62 kann auch als Drehtrennschalter ausgebildet sein.

Nun besteht mit der Ausführung nach den Figuren 1 bis 4 und mit der Ausführung nach den Figuren 5 und 6 die Möglichkeit, entweder die Sammelschienen mit den zugehörigen Vakuumschaltern zu verbinden, so daß die Vakuumschalterpole als Leistungsschalter dienen. Dann befindet sich der Trennschalter in der in Figur 5 dick ausgezogenen Stellung. Es besteht auch die Möglichkeit, daß der Schubtrennschalter die strichpunktierte Lage einnimmt, dann kann über den Leistungsschalter 27 das Schaltfeld bis hin zu den Anschlußkabeln geerdet werden, in dem der Leistungsschalter oder der Vakuumschalterpol 27 geschlossen wird.

Das gleiche gilt natürlich auch bei den Ausführungen gemäß den Figuren 1 bis 4.

Die Demontage der Schalterpole gemäß den Figuren 5 und 6 erfolgt in der gleichen Weise wie die Demontage der Schalterpole gemäß den Figuren 1 bis 4.

In Figur 1 angedeutet ist am Boden 28 des Gehäuses angeordnet ein Stromwandler 80, der den Zuführungsleiter 25 umgibt.

## Patentansprüche

1. Schaltanlage mit einer gasdichten Metallkapselung in Form eines Schaltschrankes, einem wenigstens einen Schalterpol aufweisenden Leistungsschalter, vorzugsweise einem Vakuumleistungsschalter, mit Sammelschienen, Spannungswandlern, Stromwandlern und Erdungsschaltern, dadurch gekennzeichnet, daß jeder Schalterpol (27) des Leistungsschalters in einem von dem übrigen Schaltanlagenraum (39) gasdicht getrennten Gehäuse (29) untergebracht ist, welches nach vorn verschließbar ist und dessen Innenraum mit dem Schaltanlagenraum mittels wenigstens einer absperrbaren Bypaßleitung (38) verbunden ist, so daß zur Revision des Schalterpols die Bypaßleitung abgesperrt und danach das Gehäuse geöffnet und und der Schalterpol herausgezogen werden kann.

2. Schaltanlage nach Anspruch 1, dadurch gekennzeichnet, daß in das Gehäuse (29) Stromzuführungen (25) eingeführt sind, deren innere Enden als Kontaktstücke ausgebildet sind, die mit daran angepaßten Gegenkontaktstücken am Schalterpol derart zusammenwirken, daß der Schalterpol nach vorn aus dem Gehäuse herausziehbar ist.

3. Schaltanlage nach Anspruch 2, dadurch gekennzeichnet, daß das eine Kontaktstück (25) am Boden des Gehäuses angeordnet und mit dem festen Kontaktstück (26) im Schalterpol (27) kontaktierbar ist und das andere Kontaktstück mit dem beweglichen Kontaktstück (30) des Schalterpols (27) kuppelbar ist.

4. Schaltanlage nach einem der vorherigen Ansprüche, dadurch gekennzeichnet, daß der Abschlußdeckel (40) für das Gehäuse (29) gleichzeitig den Antrieb (33) für den Schalterpol (27) trägt.

5. Schaltanlage nach einem der vorherigen Ansprüche, dadurch gekennzeichnet, daß im Bereich des Bodens (28) des Gehäuses (29), das Kontaktstück (25) umgebend, ein Stromwandler (80) vorgesehen ist.

6. Schaltanlage nach dem Oberbegriff des Anspruches 1, insbesondere nach einem der vorherigen Ansprüche, dadurch gekennzeichnet, daß jeder Schalterpol (27) des Leistungsschalters in einem von dem übrigen Schaltanlagenraum (39) gasdicht getrennten Gehäuse (29) untergebracht ist, daß zur Erzielung einer Erdung jedes Gehäuse (29) innerhalb der Schaltanlage drehbar gelagert ist und auf seiner Außenfläche diametral gegenüberliegende Kontaktfahnen (50, 51) aufweist, die in einer Drehstellung der Gehäuse (29) mit den Stromschienen (41, 42, 43) und in einer anderen Drehstellung mit den Kontaktfahnen der benachbarten Gehäuse bzw. bei den außen liegenden Schalterpolen mit an der Seitenwand der Schaltanlage angebrachten Erdungskontaktstücken (52, 53) kontaktierbar sind.

7. Schaltanlage nach einem der Ansprüche 1 bis 5, dadurch gekennzeichnet, daß auf der Außenfläche jedes Gehäuses ein Trennschalter (62) angebracht ist, der den Schalterpol (27) in einer ersten Stellung mit der zugehörigen Stromschiene (41, 42, 43) und in einer zweiten Stellung mit Erde verbindet.

8. Schaltanlage nach Anspruch 7, dadurch gekennzeichnet, daß der Trennschalter ein Drehtrennschalter ist.

9. Schaltanlage nach Anspruch 7, dadurch gekennzeichnet, daß der Trennschalter (62) ein Schubtrennschalter ist.

## Claims

1. Switchgear assembly having a gastight metal encapsulation in the form of a cubicle, a circuit breaker which has at least one switch pole, preferably a vacuum circuit breaker, having busbars, voltage converters, current transformers and earthing switches, characterized in that each switch pole (27) of the circuit breaker is accommodated in an enclosure (29) which is separated in a gastight manner from the rest of the switchgear assembly area (39) and can be closed at the front, and whose interior is connected to the switchgear assembly area by means of at least one bypass line (38) which can be shut off such that, in order to maintain the switch pole, the bypass line can be shut off and, after this, the enclosure can be opened and the switch pole can be removed.

2. Switchgear assembly according to Claim 1, characterized in that current feeders (25) are introduced into the enclosure (29), whose inner ends are designed as contact pieces which interact with mating contact pieces on the switch pole matched to them in such a manner that the switch pole can be removed from the enclosure at the front.

3. Switchgear assembly according to Claim 2, characterized in that one contact piece (25) is arranged on the base of the enclosure and can make contact with the fixed contact piece (26) in the switch pole (27), and the other contact piece can be coupled to the moving contact piece (30) of the switch pole (27).

4. Switchgear assembly according to one of the preceding claims, characterized in that the closure cover (40) for the enclosure (29) is at the same time fitted with the drive (33) for the switch pole (27).

5. Switchgear assembly according to one of the preceding claims, characterized in that a current transformer (80) is provided, surrounding the contact piece (25), in the region of the base (28) of the enclosure (29).

6. Switchgear assembly according to the precharacterizing clause of Claim 1, in particular according to one of the preceding claims, characterized in that each switch pole (27) of the circuit breaker is accommodated in an enclosure (29) which is separated in a gastight manner from the rest of the switchgear assembly area (39), in that, in order to achieve earthing, each enclosure (29) is mounted within the switchgear assembly such that it can rotate and has on its outer surface diametrically opposite contact tabs (50, 51) which can make contact with the busbars (41, 42, 43) in one rotation position of the enclosures (29) and, in another rotation position, can make contact with the contact tabs of the adjacent enclosures or, if the switch poles are located externally, with earthing contact pieces (52, 53) which are fitted on the side wall of the switchgear assembly.

7. Switchgear assembly according to one of Claims 1 to 5, characterized in that an isolating switch (62) is fitted on the outer surface of each enclosure and connects the switch pole (27) to the associated busbar (41, 42, 43) in a first position, and connects it to earth in a second position.

8. Switchgear assembly according to Claim 7, characterized in that the isolating switch is a rotary isolating switch.

9. Switchgear assembly according to Claim 7, characterized in that the isolating switch (62) is an in-line isolating switch.

## Revendications

1. Installation de commutation avec une enceinte métallique étanche au gaz, se présentant sous la forme d'une armoire de commutation, avec un commutateur de puissance comportant au moins un pôle de commutateur, de préférence un commutateur de puissance à vide, avec des barres omnibus, des convertisseurs de tension et des commutateurs de mise à la terre, caractérisée par le fait que chaque pôle de commutateur (27) du commutateur de puissance est logé dans un boîtier (29) isolé de manière étanche au gaz vis-à-vis du reste de la chambre (39) de l'installation de commutation, boîtier qui est fermé sur le devant et dont la chambre intérieure communique avec la chambre de l'installation de commutation par au moins une conduite de dérivation (38) obturable, de telle sorte que, pour la révision du pôle de commutateur, on puisse fermer la conduite de dérivation, ouvrir le boîtier et sortir le pôle de commutateur.

2. Installation de commutation selon la revendication 1, caractérisée par le fait que des arrivées de courant (25) pénètrent dans le boîtier (29), arrivées de courant dont les extrémités intérieures sont aménagées en pièces de contact qui coopèrent avec des pièces de contact conjuguées adaptées du pôle de commutateur de telle sorte que le pôle de commutateur puisse être sorti par le devant du boîtier.

3. Installation de commutation selon la revendication 2, caractérisée par le fait que l'une des pièces de contact (25) est disposée sur le fond du boîtier et peut être connectée à la pièce de contact fixe (26) dans le pôle de commutateur (27) et que l'autre pièce de contact peut être couplée à la pièce de contact mobile (30) du pôle de commutateur (27).

4. Installation de commutation selon une des revendications précédentes, caractérisée par le fait que le couvercle de fermeture (40) du boîtier (29) porte simultanément le moyen d'entraînement (33) du pôle de commutateur (27).

5. Installation de commutation selon une des revendications précédentes, caractérisée par le fait qu'il est prévu dans la région du fond (28) du boîtier (29), un convertisseur de courant (80) qui entoure la pièce de contact (25).

6. Installation de commutation selon le préambule de la revendication 1, notamment selon une des revendications précédentes, caractérisée par le fait que chaque pôle de commutateur (27) du commutateur de puissance est logé dans un boîtier (29) isolé de manière étanche au gaz vis-à-vis du reste de la chambre de l'installation de commutation (39), par le fait que pour réaliser une mise à la terre, chaque boîtier (29) est monté tournant à l'intérieur de l'installation de commutation et porte sur sa surface extérieure des lames de contact (50, 51) diamétralement opposées qui, dans une position angulaire du boîtier (29), sont en contact avec les barres omnibus (41, 52, 43) et, dans une autre position angulaire, sont en contact avec les lames de contact des boîtiers voisins ou dans le cas des pôles de commutateur externes avec des pièces de contact de terre (52, 53) prévues sur la paroi latérale de l'installation de commutation.

7. Installation de commutation selon une des revendications 1 à 5, caractérisée par le fait qu'un sectionneur (62) est monté sur la face extérieure de chaque boîtier, lequel sectionneur, dans une première position, relie le pôle de commutateur (27) à la barre omnibus (41, 42, 43) concernée et, dans une deuxième position, relie ledit pôle de commutateur à la terre.

8. Installation de commutation selon la revendication 7, caractérisée par le fait que le sectionneur est un sectionneur rotatif.

9. Installation de commutation selon la revendication 7, caractérisée par le fait que le sectionneur (62) est un sectionneur coulissant.
